Europäisches Patentamt

European Patent Office

Office européen des brevets

(11) Veröffentlichungsnummer: **0 445 760 A1**

## (12) EUROPÄISCHE PATENTANMELDUNG

(21) Anmeldenummer: 91103387.6

(22) Anmeldetag: 06.03.91

(51) Int. Cl.5: **B23Q 3/10**

(30) Priorität: 06.03.90 DE 4006990

(43) Veröffentlichungstag der Anmeldung:
11.09.91 Patentblatt 91/37

(84) Benannte Vertragsstaaten:
AT BE CH DE FR GB IT LI NL

(71) Anmelder: **Hofmann, Jörg**
**Kreuzstrasse 11**
**W-6983 Kreuzwertheim(DE)**

(72) Erfinder: **Hofmann, Raimund**
**Kreuzstrasse 11**
**W-6983 Kreuzwertheim(DE)**

(74) Vertreter: **Reinhard, Skuhra, Weise**
**Friedrichstrasse 31**
**W-8000 München 40(DE)**

(54) Vorrichtung zur Halterung einer Werkzeugplatte auf einem Werkzeugtisch.

(57) Beschrieben wird eine Vorrichtung zur Halterung einer Werkzeugplatte (6) auf einem Werkzeugmaschinentisch (1), der mit Öffnungen zur Aufnahme von Fixierungsmitteln versehen ist. Es ist eine auf dem Werkzeugmaschinentisch (1) befestigbare Zwischenplatte (2) vorgesehen, die zur Aufnahme der Werkzeugplatte (6) auf ihrer der Werkzeugplatte (6) zugewandten Fläche ein Bohrbild aufweist, das im wesentlichen auf die Grösse der aufzunehmenden Werkzeugplatten (6) abgestimmt ist. In der Zwischenplatte (2) und zentrisch zu jeder Bohrung (7,7' usw. bzw. 12,12' usw.) des Bohrbildes ist eine Gewindebohrung (14) oder dergleichen angeordnet, wobei jede Werkzeugplatte (6) zylindrische Bohrungen (8) aufweist. Als Fixierungsmittel sind Buchsen (18) vorgesehen, die mit ihrem einen Ende in jeweils eine Bohrung des Bohrbildes und mit dem anderen Ende in eine der zylindrischen Bohrungen (8) der Werkzeugplatte (6) einsetzbar sind. Die Werkzeugplatte (6) ist mittels die zylindrischen Bohrungen (8) durchsetzenden Spannelementen (15) gegenüber den Gewindebohrungen (14) oder dergleichen der Zwischenplatte (6) befestigbar.

Fig.1

EP 0 445 760 A1

Die Erfindung betrifft eine Vorrichtung gemäß dem Oberbegriff des Patentanspruchs 1.

Eine Vorrichtung gemäß dem Oberbegriff des Patentanspruchs 1 ist aus dem DE-GM 88 15 039 bekannt. Bei einer derartigen Vorrichtung zur Halterung einer Werkzeugplatte auf einem Werkzeugtisch, beispielsweise einem Frästisch, ist der Werkzeugtisch mit umgekehrt T-förmigen Schlitzen versehen, die zur Aufnahme eines Gewindebolzens dienen. Durch eine Mutter wird der Gewindebolzen in dem T-förmigen Schlitz arretiert und gegen eine Verlagerung nach oben gehalten. An seiner Oberseite ist der Gewindebolzen mit einer Auskehlung versehen, in welche von der Werkzeugplatte seitlich eine Spannschraube eingeschraubt wird. Nachteilig bei einer solchen Vorrichtung ist, daß die Werkzeugplatte jeweils vor ihrer Bearbeitung zu justieren ist. Die Justierung hat dabei sowohl in der Horizontalen als auch in der Vertikalen zu erfolgen. Insbesondere bei der Vertikalausrichtung treten Probleme auf, wenn bei einer unkorrekten Vertikalpositionierung des Gewindebolzens die Spannschraube in die Auskehlung des Gewindebolzens eingeschraubt wird. Bei zu hoch sitzendem Gewindebolzen wird ein Anheben der Werkzeugplatte während des Eindrehens der Gewindespannschraube in die ringnutförmige Auskehlung bewirkt. Insgesamt sind damit Schwierigkeiten während der Ausrichtung in der Vertikalen zu erwarten. Nachteilig ist weiterhin, daß die Werkzeugplatte mit zusätzlichen seitlichen Bohrungen versehen sein muß zur Aufnahme der Spannschrauben(n), die zur Fixierung zwischen Werkzeugplatte und Ringnut dienen.

Aus der DE-OS 36 34 118 ist eine Vorrichtung bekannt, bei der in T-förmige Schlitze eines Werkzeugtischs einsetzbare Befestigungsmittel vorgesehen sind und die Werkzeugplatte in der Horizontalen fixieren. Zum Aufspannen der Werkzeugplatte sind zusätzliche Spannelemente erforderlich. Bei dieser Vorrichtung muß jeweils eine horizontale und vertikale Justierung der Werkzeugplatte vor Beginn der Bearbeitung vorgenommen werden.

Der Erfindung liegt die Aufgabe zugrunde, eine Vorrichtung der eingangs genannten Art derart auszubilden, daß eine aufwendige Befestigung der Werkzeugplatten am Werkzeugtisch entfällt und die Justierarbeiten nach der Montage der Werkzeugplatte entfallen.

Diese Aufgabe wird erfindungsgemäß durch die Merkmale des Patentanspruchs 1 gelöst.

Weitere Ausgestaltungen der Erfindung ergeben sich aus den Unteransprüchen.

Die Erfindung schafft eine Vorrichtung, welche zur Befestigung einer Werkzeugplatte oder eines Werkstücks eine Zwischenplatte verwendet. Erfindungsgemäß werden auf jeden Werkzeugtisch unterschiedlicher Werkzeugmaschinen jeweils eine Zwischenplatte aufgesetzt und für den Bearbeitungsvorgang justiert. Nach der Montage der Zwischenplatte auf dem Werkzeugtisch ist keine weitere Justierung der Werkzeugplatten erforderlich, da die Zwischenplatte mit ihrem Bohrmuster das exakte Einsetzen der zu bearbeitenden Werkzeugplatte in festgelegte Bohrungen des Bohrmusters ermöglicht.

Gemäß der Erfindung entfällt das Justieren der Werkzeugplatte vor deren Bearbeitung, wenn diese von dem Werkzeugtisch einer ersten Maschine auf den Werkzeugtisch einer zweiten Werkzeugmaschine transferiert wird usw., wodurch sich eine wesentliche Arbeitszeitverkürzung und Arbeitseinsparung ergibt.

Die erfindungsgemäß verwendete Zwischenplatte ist mit einem vorbestimmten Bohrmuster versehen, das auf die Größe der zu verwendenden Werkzeugplatte abgestimmt ist. Die Befestigung der Werkzeugplatte auf jeder Zwischenplatte erfolgt auf einfache und schnelle Weise durch Verwendung von Buchsen, vorzugsweise Bundbuchsen. Diese Buchsen oder Bundbuchsen werden in die ausgewählten Bohrungen des Bohrmusters eingesetzt, worauf die Werkzeugplatte auf die Buchsen aufgesetzt wird und mittels eines Spannelements, vorzugsweise einer Spannschraube, an der Zwischenplatte befestigt wird. Die Zwischenplatte selbst ist am Werkzeugtisch durch Verstiftung fixiert und am Werkzeugtisch durch Verschraubung fest montiert. Damit entfallen die bisher verwendeten Spannpratzen oder andere Befestigungsmittel, die zur Halterung der Werkzeugplatte am Werkzeugtisch herkömmlicherweise verwendet werden und eine jeweilige Neujustierung der auf den Werkzeugtisch aufgelegten Werkzeugplatten erfordern.

Die Erfindung nutzt den Vorteil aus, daß Werkzeugplatten üblicherweise mit den auf in den Werkzeugplatten befindlichen zylindrischen Bohrungen abgestimmten Buchsen, insbesondere Bundbuchsen, geliefert werden und somit lediglich als zusätzliche Befestigungsmittel Spannschrauben, vorzugsweise zusammen mit Unterlegscheiben, zu benutzen sind. Derartige Buchsen bzw. Bundbuchsen werden herkömmlicherweise mit den Werkzeugplatten mitgeliefert, um die einzelnen Werkzeugplatten nach ihrer Bearbeitung zu einer Form zu verbinden.

Nachfolgend wird eine bevorzugte Ausführungsform der Erfindung anhand der Zeichnung beschrieben. Es zeigen:

Fig. 1    eine Explosivzeichnung zur Erläuterung der Befestigung einer Werkzeugplatte mittels einer Zwischenplatte am Werkzeugmaschinentisch, und

Fig. 2    ein Beispiel eines Bohrmusters in einer Zwischenplatte.

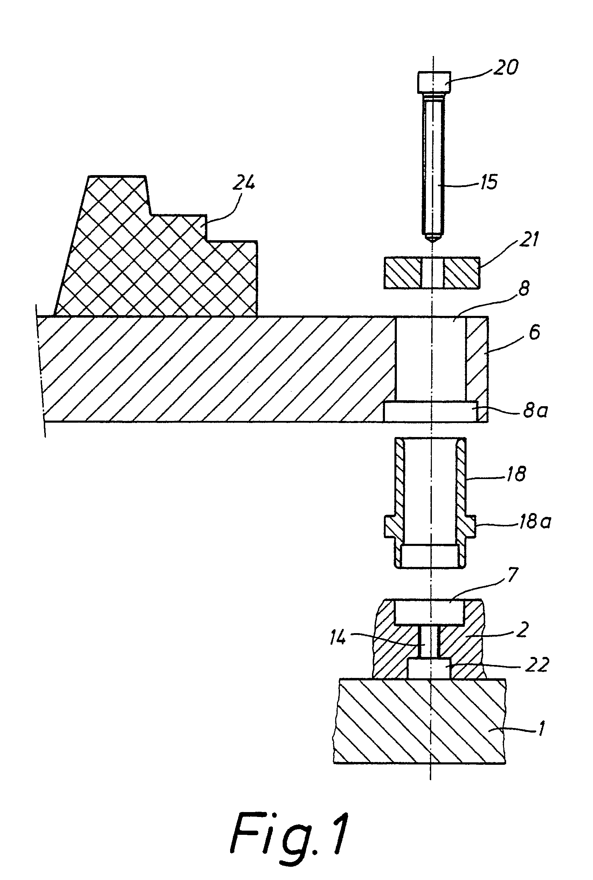

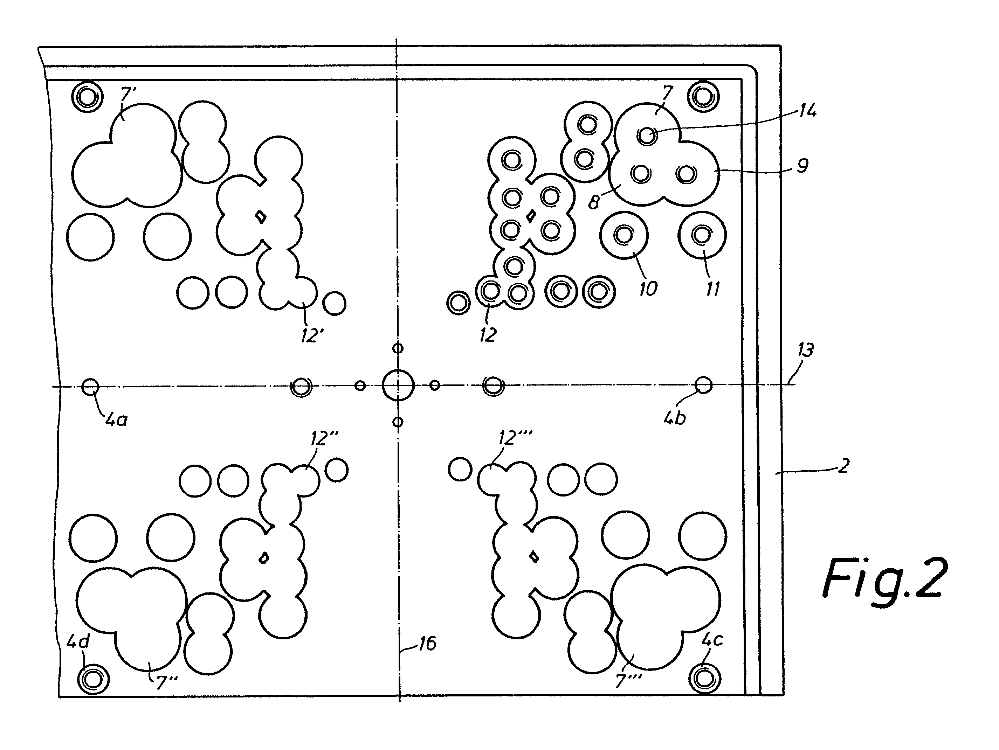

Nachfolgend wird eine bevorzugte Ausführungsform der Erfindung erläutert. Fig. 1 zeigt eine schematische, in Explosivdarstellung gehaltene Schnittansicht zur Erläuterung der Erfindung. Mit 1 ist ein Werkzeugmaschinentisch bezeichnet, beispielsweise der Werkzeugtisch einer Fräsmaschine, der in üblicher Weise aufgebaut ist und an seiner nach oben gewandten Fläche z.B. umgekehrt T-förmige Aufnahmeschlitze aufweist, die zur Aufnahme von Spannpratzen oder dergleichen dienen. Diese Schlitze sind nicht dargestellt, werden aber bei der erfindungsgemäßen Vorrichtung dazu verwendet, durch Verstiftung eine Zwischenplatte 2 aufzunehmen und die Zwischenplatte 2 gegenüber dem Werkzeugmaschinentisch 1 zu fixieren und zu haltern. Nach Montage der Zwischenplatte 2 verbleibt die Zwischenplatte 2 auf dem Werkzeugtisch 1 in der durch die Verstiftung fixierten und justierten Lage. Die Zwischenplatte 2 weist in Fig. 2 gezeigte Bohrungen 4a, 4b, 4c, 4d usw. auf, mit Hilfe welcher die Zwischenplatte 2 verstiftet und/oder gegenüber dem Werkzeugmaschinentisch 1 verschraubt wird. Die Bohrungen 4a, 4b usw. dienen beispielsweise ausschließlich der Verstiftung und die Bohrungen 4c, 4d usw. sind zum Verschrauben der Zwischenplatte 2 mit dem Werkzeugmaschinentisch 1 vorgesehen.

Als Zwischenplatte 2 wird vorzugsweise eine Werkzeugplatte üblicher Größe benutzt, die entsprechend Fig. 2 bereits mit den Bohrungen 4c, 4d usw. versehen ist und an ihrer zum Werkzeugmaschinentisch 1 abgewandten Fläche mit einem Bohrmuster versehen ist, wie es als Beispiel in Fig. 2 dargestellt ist.

Die Zwischenplatte 2 wird mit solcher Größe gewählt, daß sie zur Aufnahme der jeweils gewünschten Werkzeugplattengrößen verwendbar ist, d.h. die Zwischenplatte 2 ist im allgemeinen von größerer Fläche als die zu bearbeitenden Werkzeug- oder Formplatten, welche mit 6 bezeichnet sind.

Gemäß der Darstellung nach Fig. 2 ist die Zwischenplatte 2 mit einer Vielzahl von Bohrungen versehen, die entweder einzeln ausgebildet sind oder seitlich ineinander übergehen, wie beispielsweise die Bohrungen 7, 8 und 9, während die Bohrungen 10, 11 voneinander getrennte und zueinander beabstandete Bohrungen darstellen. Das in Fig. 2 im rechten oberen Quartal dargestellte Bohrbild ist in vorzugsweise symmetrisch gegenüber einer Symmetrielinie 16 und/oder symmetrisch gegenüber einer Symmetrielinie 11 befindlicher Anordnung auf der Zwischenplatte 2 vorgesehen. Auf diese Weise kann z.B. eine Werkzeugplatte aufgesetzt werden, deren vier Bohrungen 8 in Dekkung gebracht werden zu den Bohrungen 7, 7', 7" und 7''' des Bohrmusters gemäß Fig. 2. Eine kleinere Werkzeugplatte 6 kann beispielsweise derart auf die Zwischenplatte 2 aufgesetzt werden, daß ihre an den vier Kanten befindlichen Bohrungen 8 so plaziert werden, daß sie mit den Bohrungen 12, 12', 12" und 12''' fluchten. Wie aus Fig. 2 erkennbar ist, können die Bohrungen, z.B. die Bohrungen 7, 7' usw. einen größeren Durchmesser haben als die weiter innen in Richtung auf die Mitte der Zwischenplatte 2 befindlichen Bohrungen 12, 12' usw.

Die Zwischenplatte 2 weist mittig zu jeder Bohrung 7, 7' usw. bzw. 12, 12' usw. eine Gewindebohrung 14 auf, deren Innendurchmesser kleiner ist als der Innendurchmesser der darüber befindlichen Bohrung 7 oder 12 des in Fig. 2 gezeigten Bohrmusters. Die Gewindebohrung 14 dient zur Befestigung einer Spannschraube 15, wie dies nachfolgend noch erläutert wird und ist vorzugsweise etwa in der Mitte der Plattenstücke liegend ausgebildet.

Nach der festen Montage der Zwischenplatte 2 auf dem Werkzeugmaschinentisch 1 werden vor dem Auflegen einer Werkzeugplatte 6 in vorher bestimmte Bohrungen, z.B. die Bohrungen 7, 8, 9 vorzugsweise vier Buchsen 18 eingesetzt, deren unteres Ende einen dem Innendurchmesser der genannten Bohrungen 7, 8 usw. entsprechenden Außendurchmesser aufweisen. Die Buchsen 18 werden auf die Zwischenplatte 2 aufgesteckt. Dann wird eine Werkzeugplatte 6 so auf diese Buchsen 18 aufgesteckt, daß die Buchsen 18 in die zylindrischen Bohrungen 8 der Werkzeugplatte 6 einugreifen. Sobald die Werkzeugplatte 6 auf die Buchsen 18 aufgesetzt ist, wird jeweils eine Spannschraube 15 durch die zylindrischen Bohrungen 6 hindurch in die Zwischenplatte 2 eingeschraubt mit Hilfe der dort vorgesehenen Gewindebohrungen 14. Werden Spannschrauben 15 der in Fig. 1 gezeigten Art verwendet, deren Kopf 20 klein ist im Vergleich zur Bohrung 8 der Werkzeugplatte 6, werden die Spannschrauben 15 unter Zwischenfügung von Unterlegscheiben 21 in die Bohrungen 6 eingesteckt, so daß die Spannschrauben 15 über die Unterlegscheibe 21 die Werkzeugplatte 6 in Richtung auf die Zwischenplatte 2 spannen.

Werkzeugplatten 6 mit bereits vorgesehenen zylindrischen Bohrungen 8 sind in verschiedenen Größen im Handel verfügbar. Derartige Werkzeugplatten 6 werden zunehmend zusammen mit Bundbuchsen geliefert, wobei die Bundbuchsen im allgemeinen dazu dienen, mehrere Werkzeugplatten 6 nach deren Bearbeitung zu einer Form zusammenzusetzen. Erfindungsgemäß ist vorgesehen, daß anstelle der Buchsen 18 derartige Bundbuchsen verwendet werden, von welchen in Fig. 1 eine Ausführungsform gezeigt ist. Jede Bundbuchse ist umfangsmäßig mit einen Bund 18a versehen, der in einen entsprechend vergrößerten Bohrungsbereich 8a der Werkzeugplatte 6 eingesetzt wird, so daß nach dem Zusammenbau von Werkzeugplatte und Zwischenplatte 2 die Bundbuchse 18 gemäß Fig. 1 so weit in der Werkzeugplatte 6 sitzt, daß der Bund 18a im vergrößerten Bohrungsbereich 8a zu liegen kommt und gleichzeitig eine Abstützung der Bundbuchse 18 gegenüber der Oberfläche der Zwischenplatte 2 bewirkt und die Werkzeugplatte 6 bündig auf der Zwischenplatte 2 aufliegt.

Gemäß einer weiteren Ausgestaltung der Vorrichtung ist die Zwischenplatte 2 an ihrer nach unten weisenden Fläche im Bereich der Gewindebohrung 14 mit einem Bohrbild 22, 23, 24 usw. ähnlich dem Bohrbild 7, 8, 9 usw. versehen, das sich von letzterem maßlich unterscheidet. Damit wird verhindert, daß der Benutzer sich mit nur einem Bohrbild auf die Verwendung von Werkzeugplatten 6 von nur einem Hersteller festlegen muß.

In der Explosionsdarstellung nach Fig. 1 ist auf der Form- bzw. Werkzeugplatte 6 ein Einsatz 24 angeordnet. Dieser Einsatz 24 wird auf die Werkzeugplatte 6 aufgespannt und ausgerichtet. Sind nun mehrere Arbeitsgänge an diesem Einsatz notwendig auf mehreren verschiedenen Werkzeugmaschinen, so wechselt man die Werkzeugplatte 6 mit aufgespanntem Einsatz 24. Ein wiederholtes Ausrichten des Einsatzes 24 wird dadurch vermieden, daß die Werkzeugplatte 6 somit als Trägerplatte für den Einsatz 24 dient. Dabei kann die Werkzeugplatte 6 bzw. Trägerplatte der Größe des Einsatzes 24 angepaßt werden und auch kleiner als dieser sein.

Zusätzlich zu der Werkzeugplatte 6 kann eine weitere derartige Werkzeugplatte vorgesehen sein, die entweder auf der ersten Werkzeugplatte oder neben der ersten Werkzeugplatte in Vertikallage montiert wird, so daß zwei derart vorgesehene Werkzeugplatten ein Winkelstück ergeben, das auch eine vertikale Fixierung eines Einsatzes 24 gestattet.

Der oder die Einsätze 24 können Stahl-Formteile oder dergleichen sein.

Die Erfindung schafft eine Vorrichtung zur Halterung einer Werkzeugplatte bzw. Formplatte auf einem Werkzeugtisch, beispielsweise Bohrtisch oder Frästisch. Mit Hilfe dieser Vorrichtung erübrigt sich die jeweilige Feinjustierung der aufzuspannenden Werkzeug- bzw. Formplatte nach ihrem Auflegen, wenn sie die unbearbeitete oder teilweise bearbeitete Werkzeugplatte von einem Werkzeugtisch zu einem anderen transferiert wird und gegebenenfalls einer weiteren Bearbeitung unterliegen soll. Jeder Werkzeugtisch wird mit einer derartigen Zwischenplatte versehen, d.h. für jede Werkzeugmaschine wird eine derartige Zwischenplatte gefertigt und auf dem Werkzeugmaschinentisch angeordnet, ausgerichtet und direkt auf dem Werkzeugmaschinentisch verbohrt, verstiftet und verschraubt, derart, daß ein Referenzpunkt der Zwischenplatte gegenüber der Werkzeugmaschine eingehalten wird. Bei der nachfolgenden Bearbeitung der Werkzeugplatten brauchen die Werkzeugplatten nur unter Benutzung festgelegter Bohrungen des Bohrbildes auf die Zwischenplatte 2 des betreffenden Werkzeugmaschinentischs oder bei einer seriellen Bearbeitung von der Zwischenplatte eines Werkzeugmaschinetischs zur Zwischenplatte eines anderen Werkzeugmaschinentischs transferiert zu werden und mit Hilfe der Buchsen in Flucht zu den vorbestimmten Bohrungen des Bohrbildes aufgesetzt und montiert zu werden.

Ersichtlicherweise ist die Vorrichtung nicht auf das in Fig. 2 gezeigte Bohrbild beschränkt, vielmehr können Änderungen des Bohrbildes, abhängig vom Einsatz der verwendeten Werkzeugplatten, vorgenommen werden. Darüber hinaus kann die Zwischenplatte 2 mit zusätzlichen, das Bohrbild bestimmenden Bohrungen versehen sein, die das Aufsetzen von Schraubstöcken oder anderen Werkzeugen ermöglichen.

Die bei der erfindungsgemäßen Vorrichtung zur Fixierung der Werkzeugplatte 6 auf der Zwischenplatte 2 dienenden Buchsen oder Bundbuchsen 18 sind vorteilhafterweise gleichzeitig auch zur Befestigung der Werkzeugplatte 6 an/auf der Zwischenplatte 2 mit Hilfe der Spannelemente 15 vorgesehen.

**Patentansprüche**

1. Vorrichtung zur Halterung einer Werkzeugplatte auf einem Werkzeugmaschinentisch, der mit Öffnungen zur Aufnahme von Fixierungsmitteln versehen ist,
   **dadurch gekennzeichnet,**
   daß eine auf dem Werkzeugmaschinentisch befestigbare Zwischenplatte (2) vorgesehen ist, die zur Aufnahme der Werkzeugplatte (6) auf ihrer der Werkzeugplatte (6) zugewandten Fläche ein Bohrbild aufweist, das im wesentlichen auf die Größe der aufzunehmenden Werkzeugplatten (6) abgestimmt ist,
   daß in der Zwischenplatte (2) und zentrisch zu jeder Bohrung (7, 7', 7'' usw.) des Bohrbildes eine Gewindebohrung (14) oder dergleichen angeordnet ist, wobei jede Werkzeugplatte (6) zylindrische Bohrungen (8) aufweist,
   daß als Fixierungsmittel Buchsen (18) vorgesehen sind, die mit ihrem einen Ende in jeweils eine Bohrung (7, 7' usw.) des Bohrbildes und mit dem anderen Ende in eine der zylindrischen Bohrungen (8) der Werkzeugplatte (6) einsetzbar ist, und
   daß die Werkzeugplatte (6) mittels die zylindrischen Bohrungen (8) durchsetzenden Spannelementen (15) gegenüber den Gewindebohrungen (14) oder dergleichen der Zwischenplatte (2) befestigbar sind.

2. Vorrichtung nach Anspruch 1, dadurch gekennzeichnet, daß als Spannelemente (15) Spannschrauben vorgesehen sind.

3. Vorrichtung nach Anspruch 2, dadurch gekennzeichnet, daß zwischen den Kopf (20) der Spannschrauben (15) und die Werkzeugplatte (6) eine Unterlegscheibe (21) eingesetzt ist.

4. Vorrichtung nach einem der vorangehenden Ansprüche, dadurch gekennzeichnet, daß als Fixiermittel Bbuchsen (18) vorgesehen sind, deren maximaler Außendurchmesser etwa gleich groß ist wie der Innendurchmesser des an der unteren Fläche der Werkzeugplatte (6) befindlichen Abschnitte der zylindrischen Bohrungen (8), während er größer ist als die Bohrung des Bohrbildes in der Zwischenplatte (2).

5. Vorrichtung nach Anspruch 4, dadurch gekennzeichnet, daß als Fixiermittel Bundbuchsen (18) vorgesehen sind.

6. Vorrichtung nach wenigstens einem der voran-gehenden Ansprüche, dadurch gekennzeich-net, daß die Fixiermittel (18) zur Befestigung der Werkzeugplatte (6) auf der Zwischenplatte (2) vorgesehen sind.

*Fig.1*

Fig.2

Europäisches
Patentamt

**EUROPÄISCHER RECHERCHENBERICHT**

| EINSCHLÄGIGE DOKUMENTE | | | EP 91103387.6 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| A | DE - A - 1 901 139 (MOLINS MACHINE COMPANY LTD.) * Fig. 7,8; Seite 8, 1. Absatz * | 1 | B 23 Q 3/10 |
| A | EP - A2 - 0 310 967 (MANFRED SCHANZ) * Fig. 1 * | | |
| A | EP - A2 - 0 275 023 (STRACK-NORMA GMBH) * Fig. 7 * | | |

RECHERCHIERTE SACHGEBIETE (Int Cl⁵)

B 23 Q 3/00

Der vorliegende Recherchenbericht wurde für alle Patentansprüche erstellt.

| Recherchenort | Abschlußdatum der Recherche | Prüfer |
|---|---|---|
| WIEN | 27-05-1991 | WEISS |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82